# EUROPEAN PATENT APPLICATION

(11) **EP 4 345 500 A1**
(43) Date of publication of application: **03.04.2024**
(21) Application number: 22198481.8
(22) Date of filing: 28.09.2022
(51) Int. Cl.: G01S 13/58, G01S 13/88, G01F 1/712, G01F 1/704, G01S 7/292, G01S 7/35

(54) **DETERMINING A FLOW METRIC FOR A FLOW OF GRANULAR PARTICLES**

(71) Applicant: Acconeer AB, 211 77 Malmö (SE)
(72) Inventor: Almers, Peter, 216 44 LIMHAMN (SE); Wallin, Amanda, 247 72 GENARP (SE)
(74) Representative: Lind Edlund Kenamets Intellectual Property AB

(57) **Abstract**

The present inventive concept relates to a method (20) for determining a flow metric for a flow of granular particles, the method (20) comprising: performing (S200), using a radar sensor (100), a plurality of radar measurements distributed over a measurement time period comprising: transmitting (S202) radar pulses through the flow and in a direction across the flow, receiving (S204) reflected signals, and sampling (S206) the reflected signals; estimating (S208), using a radar signal processor (120) and based on the samples, a variation over time of an amplitude of the reflected signals; and determining (S210), using the radar signal processor (120), the flow metric based on the estimated variation, wherein the flow metric is indicative of a flow rate of the flow of granular particles.

## Description

### Technical field

The present inventive concept relates to a method for determining a flow metric for a flow of granular particles.

### Background of the invention

Industrial pipelines are often used to transport different types of materials. A typical use is to transport flows of granular particles, e.g., grains, grain products, sand, gravel, etc. A typical parameter which is of interest to monitor and adjust is the flow rate (kg/s) of material which is flowing through the pipeline. However, this parameter is often difficult to determine since different flow speeds (m/s) can result in the same flow rate. This, since the particle number density can vary with varying flow speeds. A further problem with existing non-invasive measurement techniques (e.g., radar based) is that they typically rely on determining Doppler shifts of the received signals. However, such techniques are often associated with complex analyses and therefore require processing capabilities for processing and evaluating such signals. Thus, there exists a need for improvements within the art.

### Summary of the invention

It is an object to, at least partly, mitigate, alleviate, or eliminate one or more of the above-identified deficiencies in the art and disadvantages singly or in any combination and solve at least the above-mentioned problem.

According to an aspect, a method for determining a flow metric for a flow of granular particles is provided. The method comprising: performing, using a radar sensor, a plurality of radar measurements distributed over a measurement time period comprising: transmitting radar pulses through the flow and in a direction across the flow, receiving reflected signals, and sampling the reflected signals; estimating, using a radar signal processor and based on the samples, a variation over time of an amplitude of the reflected signals; and determining, using the radar signal processor, the flow metric based on the estimated variation, wherein the flow metric is indicative of a flow rate of the flow of granular particles.

Within the context of this disclosure, the wording "flow rate" should be construed as mass flow rate. Put differently, by flow rate, as used herein should be understood as the mass of the flow of granular particles per unit of time.

The present inventive concept is based on the realization that the flow rate of the flow of granular particles can be estimated based on the temporal variation of an amplitude of reflected signals. This is less complex than conventional algorithms, e.g., such as measurements based on determining Doppler shifts of reflected signals. Hence, by means of the present inventive concept, a less complex method of determining a flow metric indicative of the flow rate of the flow of granular particles is allowed.

A further associated advantage is that the flow metric is determined using low complexity calculations, whereby associated computational costs and/or requirements may be reduced.

Estimating the variation may comprise calculating a variance of the amplitude of the reflected signals.

The method may further comprise: estimating, using the radar signal processor, a flow rate of the flow of granular particles from the determined flow metric.

The estimated flow rate may be an absolute flow rate or a relative flow rate. Within the context of this disclosure, the wording "absolute flow rate" should be construed as a flow rate in absolute terms. This is in contrast with a "relative flow rate" which should be construed as a flow rate in relative terms. Put differently, a flow rate in absolute terms may be a value (e.g., in kg/s) which is the actual flow rate of the flow of granular particles. A flow rate in relative terms may be a value (e.g., dimensionless) which is the flow rate of the flow of granular particles relative to a different measurement (e.g., a variation of amplitudes of reflected signals when there is no flow of granular particles).

The flow rate of the flow of granular particles may be estimated using a mapping function correlating flow metrics with flow rates.

An associated advantage is that an absolute flow rate of the flow of granular particles may be estimated.

The mapping function may be a machine learning model trained to correlate flow metrics with flow rates.

An associated advantage is that an absolute flow rate of the flow of granular particles may be estimated with high accuracy.

Sampling the reflected signals may comprise: generating a reference pulse for each transmitted radar pulse, wherein the generation of the reference pulse may be delayed with respect to the transmitted radar pulse by a delay amount; mixing a respective reflected signal with the reference pulse to obtain a mixing product; integrating the mixing product; and converting the integrated mixing product to a digital value forming the sample.

An associated advantage is that a power consumption associated with the sampling of the reflected signals may be reduced.

A further associated advantage is that the digital value forming the sample may be indicative of the amplitude of the reflected signals.

The delay amount may be the same for each radar measurement of the plurality of radar measurements.

An associated advantage is that the temporal variation of the amplitude of the reflected signals may be a more robust measure of the flow rate. In particular, since the same delay amount is used for each radar measurement, the variation of the amplitude of the reflected signals may not depend on variations in the measurement distance (i.e., corresponding to the delay amount) and instead depend on variations in the flow of granular particles (e.g., variations of the flow rate).

The radar sensor may be arranged at a first side of the flow of granular particles, and wherein the delay amount may correspond to a measurement distance from the radar sensor to a point at a second side of the flow of granular particles opposite to the first side.

An associated advantage is that the reflected signals may avoid sampling at a position within the flow of granular particles. Hence, a contribution to the mixing product from a specific location inside the flow may be reduced. This may be advantageous since that contribution may dominate the mixing product, and may thereby obscure any other contribution to the mixing product.

A component of the direction of the transmitted radar pulses may be along the direction of the flow, and the method may further comprise: using the radar signal processor: determining a frequency spectrum of the samples, determining a center of mass of the frequency spectrum, and determining a compensated flow metric based on the flow metric and the center of mass.

An associated advantage is that a more accurate measure (i.e., the compensated flow metric) of the flow rate of the flow of granular particles may be determined. This is due to the center of mass of the frequency spectrum of the samples being dependent on the flow speed of the flow of granular particles. It has been found that the variation of the amplitude of the reflected signals may vary with both the flow rate and the flow speed. Hence, different variations of the amplitude of the reflected signals may be determined (depending on the flow speed) for the same flow rate. However, it has been found that, for a fixed flow rate, the center of mass of the frequency spectrum may be lower for lower flow speeds, and higher for higher flow speeds. Thus, by compensating the flow metric with the center of mass of the frequency spectrum, the compensated flow metric may be less sensitive to variations in only flow speeds.

The flow metric and the center of mass may be normalized prior to determining the compensated flow metric. The method may further comprise: normalizing the flow metric; and normalizing the center of mass; and wherein the compensated flow metric may be determined based on the normalized flow metric and the normalized center of mass.

The method may further comprise: performing, using the radar sensor, a further plurality of radar measurements distributed over a further measurement time period different from said measurement time period, comprising: transmitting radar pulses through the flow and in a direction across the flow, receiving further reflected signals, and sampling the further reflected signals; estimating, using the radar signal processor and based on samples of the further reflected signals, a variation over time of an amplitude of the further reflected signals; and determining, using the radar signal processor, a further flow metric based on the determined variation of the amplitude of the further reflected signals; and generating a signal indicative of a changed flow based on a comparison of said flow metric and the further flow metric.

An associated advantage is that the flow of granular particles may be monitored by finding variations in the generated signal. For example, variations in the generated signal may be indicative of a changed flow rate of the flow of granular particles.

The flow of granular particles may be inside a conduit, and the radar sensor may be arranged outside the conduit.

An associated advantage is that a less complex setup capable of determining the flow metric may be allowed. In particular, avoiding to place the radar sensor inside the conduit, and possible within the flow of granular particles, the setup for determining the flow metric may be less complex and/or easier to add to existing conduits.

The delay amount may correspond to a measurement distance larger than a diameter of the conduit.

An associated advantage is that the reflected signals may avoid sampling at a position within the conduit, and thereby avoid a measurement distance corresponding to a position within the flow of granular particles. This may be advantageous since it may avoid the problems associated with sampling within the flow as discussed above.

A further associated advantage is that it may be a less complex design capable of ensuring that the measurement distance corresponds to a point which is not within the flow of granular particles, and thereby the problems associated with sampling within the flow as discussed above may be avoided.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

Hence, it is to be understood that this inventive concept is not limited to the particular steps of the methods described or component parts of the systems described as such method and system may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The above and other aspects of the present inventive concept will now be described in more detail, with reference to appended drawings showing variants of the inventive concept. The figures should not be considered limiting the inventive concept to the specific variant; instead they are used for explaining and understanding the inventive concept. As illustrated in the figures, the sizes of layers and regions are exaggerated for illustrative purposes and, thus, are provided to illustrate the general structures of variants of the present inventive concept. Like reference numerals refer to like elements throughout.
Figure 1A illustrates a first scenario for determining a flow metric for a flow of granular particles.
Figure 1B illustrates a second scenario for determining a flow metric for a flow of granular particles.
Figure 1C illustrates a third scenario for determining a flow metric for a flow of granular particles.
Figure 2 is a block scheme of a method determining a flow metric for a flow of granular particles.
Figure 3 is a block scheme of additional method steps that may be performed in the method of Fig. 2.
Figure 4A is a diagram illustrating the variation of the amplitude of the reflected signals, at a fixed flow rate, as a function of flow speed.
Figure 4B is a diagram illustrating the center of mass, at a fixed flow rate, as a function of flow speed.
Figure 4C is a diagram illustrating the product of the variation and the center of mass, at a fixed flow rate, as a function of flow speed.
Figure 5A is a diagram illustrating the variation of the amplitude of the reflected signals, at a fixed flow speed, as a function of flow rate.
Figure 5B is a diagram illustrating the center of mass, at a fixed flow speed, as a function of flow rate.
Figure 5C is a diagram illustrating the product of the variation and the center of mass, at a fixed flow speed, as a function of flow rate.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

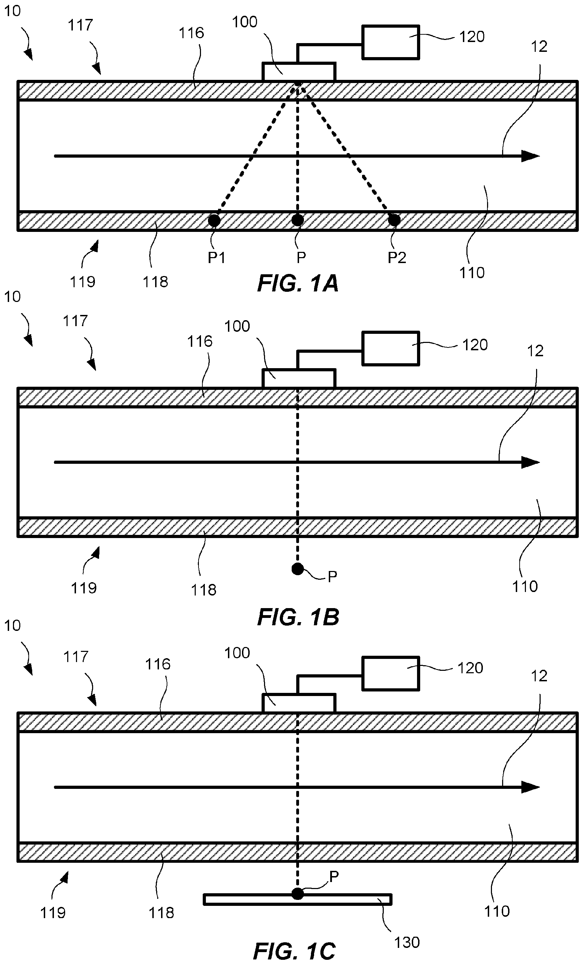

Figure 1A illustrates a cross-section of a first measurement setup 10 in which a flow metric for a flow of granular particles is determined. The flow of granular particles is represented by an arrow 12 in Fig. 1A - Fig. 1C. Figure 1A - Fig. 1C each illustrates a cross-section of the respective measurement setup 10. The flow metric is indicative of a flow rate of the flow of granular particles. Here, "flow rate" should be construed as mass flow rate. Put differently, by flow rate, as used herein should be understood as the mass of the flow of granular particles per unit of time. As is seen in the examples of Fig. 1A - Fig. 1C, the setup 10 comprises a radar sensor 100 arranged at a conduit 110. The conduit 110 may comprise a first wall 116 and a second wall 118. It should be noted that the conduit 110 may be cylindrically shaped. Hence, the first wall 116 and the second wall 118 may be part of the same cylindrically shaped surface of the conduit 110. The radar sensor 100 may comprise a transmitter circuit configured to transmit radar signals. The transmitted radar signals may have a carrier frequency in the mmWave band, i.e. a carrier frequency in a range from 30 GHz to 300 GHz. The mmWave band may facilitate high accuracy measurements in short range applications, using radar sensors and antennas with compact form factor. The transmitted radar signal may be ultra-wideband pulses, e.g. a bandwidth equivalent to a pulse duration in a range of 50 ps to 10 ns. The radar sensor 100 may comprise a transmitter antenna. The transmitter circuit may be configured to transmit the radar signal via the transmitter antenna. The radar sensor 100 may comprise a receiver circuit configured to receive and acquire radar signals. The radar sensor 100 may comprise a receiving antenna. The receiver circuit may be configured to receive the radar signal via the receiver antenna. Alternatively, the radar sensor 100 may include a single antenna configured for both transmission and reception of signals. The antenna(s) may be of a directional type, for instance a dipole antenna, a Yagi antenna, or a phased array antenna. Optionally, a reflector such as a horn reflector may be arranged in connection with the radar sensor to improve the directionality of the radar sensor. The radar sensor 10 may be a phase-coherent radar sensor, i.e. a sensor able to produce phase-coherent radar reflection data, such that there is phase-coherence (a predetermined phase-relationship) between radar signals transmitted at temporally spaced measurement occasions. The radar sensor 100 may advantageously be of pulsed-type, which lends itself to power efficient implementations. However, a continuous wave-type of radar sensor is in principle also possible, such as a frequency modulated continuous wave radar.

The setup 10 further comprises a radar signal processor 120 communicatively connected to the radar sensor 100. The radar sensor 100 may be configured to output data to the radar signal processor 120. The radar signal processor 120 may in turn be configured to receive the data from the radar sensor 100. The radar signal processor 120 may be connected to the radar sensor 100 via a wired connection and/or a wireless connection. The radar signal processor 120 is illustrated as a separate device from the radar sensor 100 in Fig. 1A - Fig. 1C. It is however to be understood that the radar signal processor 120 may form part of the radar sensor 100 or of a separate computing device (not illustrated) such as a computer or server (e.g., a cloud server).

The respective functions of the various functional elements of the setup 10, such as the radar sensor 100 and the radar signal processor 120 may be implemented in respective dedicated circuitries, application-specific integrated circuits (ASICs) or field-programmable gate arrays (FPGAs). Microprocessor and software instruction-based implementations are also conceivable. For instance, the functions of, e.g., the radar signal processor 120 may be implemented in binaries comprising instructions for a microprocessor. The binaries may be stored in a computer readable medium, such as a nonvolatile and non-transitory memory, and be configured to be executed by one or more microprocessors. The communication of data between the various functional entities of the setup 10, such as the radar sensor 100 and the radar signal processor 120 may be performed via a communication interface, such as a data bus.

Even though the radar sensor 100 is arranged directly on the conduit 110 in the examples illustrated in Fig. 1A - Fig. 1C, it is to be understood that the radar sensor 100 may be arranged at a distance from the conduit 110. As is further illustrated in the examples of Fig. 1A - Fig. 1C, the radar sensor 100 may be arranged outside the conduit 110. This may be a less complex setup 10 compared to a setup in which the radar sensor 100 is arranged inside the conduit 110. For instance, since the conduit 110 may require a low amount of modification, it may be easier and/or more convenient to arrange the radar sensor 100 outside the conduit 110 compared to inside the conduit 110.

The conduit 110 in the examples of Fig. 1A - Fig. 1C has a circular cross-section. However, other shapes are possible as well. For instance, the cross-section of the conduit may be rectangular. The conduit 110 is configured to convey the flow from an inlet 112 of the conduit 110 to an outlet 114 of the conduit. Put differently, the flow may be inside the conduit 110 as illustrated in the examples of Fig. 1A - Fig. 1C. The flow may be a driven flow. The flow may, e.g., be driven by an airflow. The airflow may be generated using fans (not illustrated in Fig. 1A - Fig. 1C). The airflow may be a pressure-driven flow. The flow may be a non-fluid flow. For instance, the flow may comprise fertilizer, seeds, flour, powder, etc.

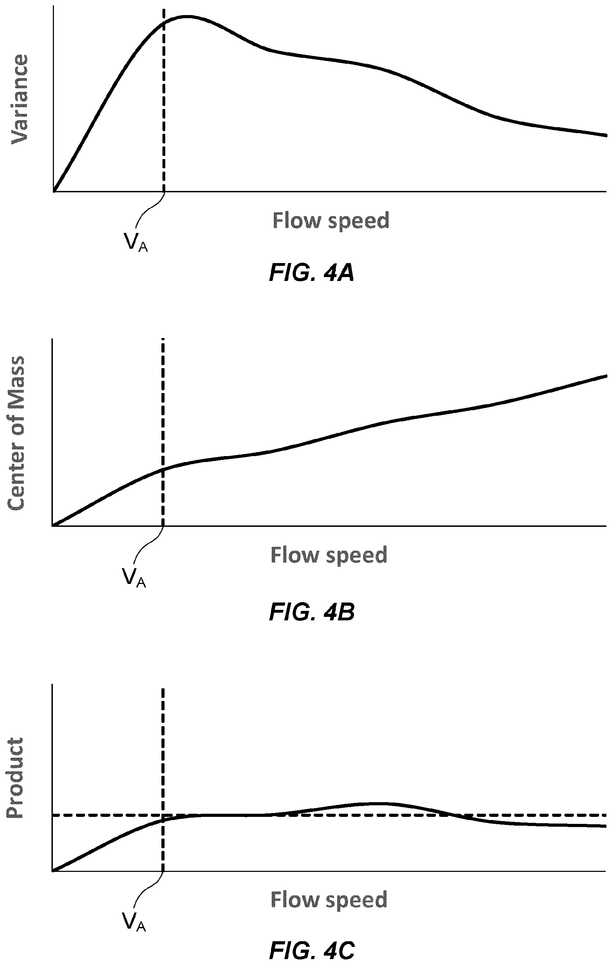

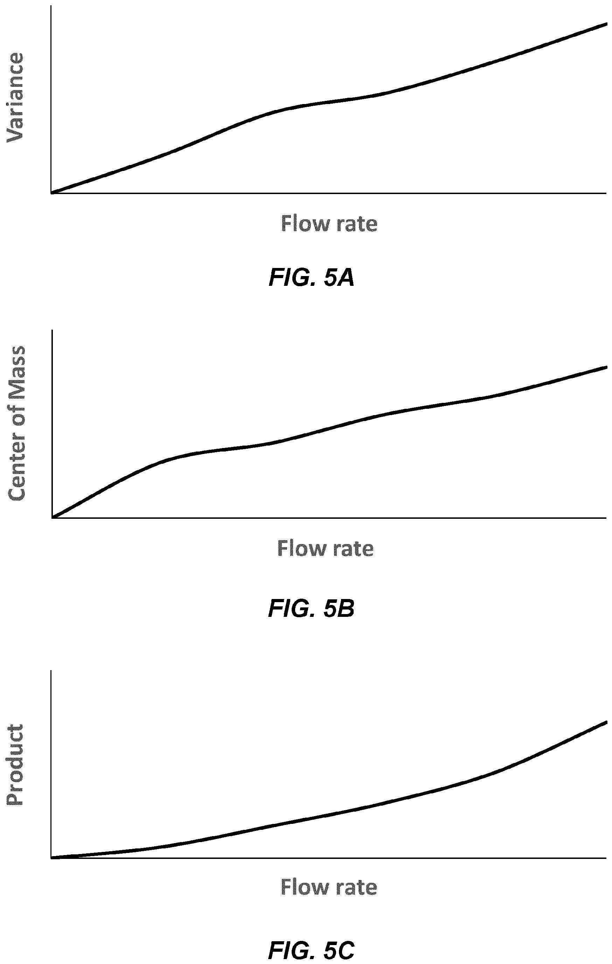

The radar sensor 100 is configured to perform a plurality of radar measurements. The plurality of radar measurements is distributed over a measurement time period. The measurement time period may be defined by a number of radar measurements of the plurality of radar measurements. The number of radar measurements may be any number of measurements. For instance, the number of radar measurements may be 10, 100, 1000, 10000, etc. The measurement time period may be a predetermined time period. The number of radar measurements may depend on the predetermined time period. For example, the number of radar measurements may be as many radar measurements as possible that may be made during the predetermined time period. The radar sensor 100 in the examples of Fig. 1A - Fig. 1C is configured to perform the plurality of radar measurements by being configured to transmit radar pulses through the conduit 110 and in a direction across the conduit 110, receive reflected signals, and sample the reflected signals. Hence, since the flow of granular particles, in this case, is inside the conduit 110, the radar sensor 100 is configured to transmit radar pulses through the flow and in a direction across the flow. The transmitted radar pulses may be affected by the flow as they propagate through the flow. For instance, the transmitted radar pulses may be scattered and/or reflected by the flow. This means that an amplitude of the reflected signals received by the radar sensor 100 may be affected by the flow. Therefore, temporal variations in the amplitude may be indicative of temporal changes of the flow. It has been found that a lower temporal variation of the amplitude of the reflected signals may indicate a higher flow rate than a larger temporal variation of the amplitude would. Details regarding these relationships will be discussed in connection with Fig. 4A - Fig. 4C, and Fig. 5A - Fig. 5C below.

The radar sensor 100 may be configured to sample the reflected signals by being configured to generate a reference pulse for each transmitted radar pulse. The reference pulse may have a carrier frequency in the mmWave band, i.e. a carrier frequency in a range from 30 GHz to 300 GHz. The reference pulse may be ultra-wideband pulses, e.g. a bandwidth equivalent to a pulse duration in a range of 50 ps to 10 ns. The radar sensor 100 may be configured to generate the reference pulse after a delay amount with respect to the corresponding radar pulse. Put differently, the radar pulse and the reference pulse may be generated at different points in time separated by the delay amount. The radar sensor 100 may be further configured to sample the reflected signals by being configured to mix the reference pulse with the reflected signal corresponding to the transmitted radar pulse for which the reference pulse was generated, and thereby form a mixing product. The delay amount may correspond to a measurement distance. Hence, the reflected signals may be sampled at the measurement distance, and a majority of a signal level of the mixing product may be the reflected signal from a position at the measurement distance from the radar sensor. The same delay amount may be used for each radar measurement of the plurality of radar measurements. Put differently, each radar measurement of the plurality of radar measurements may be sampled at the same measurement distance. Since the same delay amount is used for each radar measurement, the variation of the amplitude of the reflected signals may not depend on variations in the measurement distance (i.e., corresponding to the delay amount) and instead depend on variations in the flow of granular particles. As is illustrated in the examples of Fig. 1A- Fig. 1C, the radar sensor 100 may be arranged at a first side of the conduit 110. As is illustrated in the examples of Fig. 1B - Fig. 1C, the delay amount may correspond to a measurement distance from the radar sensor to a point P at a second side of the conduit 110. Hence, since the flow, in this case, is inside the conduit 110, the radar sensor 100 may be arranged at a first side 117 of the flow and the delay amount may correspond to a measurement distance from the radar sensor 100 to a point P at a second side 119 of the flow. This is also true for the example illustrated in Fig. 1A, where the points P, P1, P2 are at the second wall 118 of the conduit 110. The first side 117 of the flow may be opposite the second side 119 of the flow. In the example of Fig. 1A, the delay amount corresponds to a measurement distance from the radar sensor 100 to a point P, P1, P2 at the second wall 118 of the conduit 110. As is seen in Fig. 1A, the direction from the radar sensor 100 to the point P is predominantly transverse to the direction of the flow. As is further seen in Fig. 1A, the directions from the radar sensor 100 to a first point P1 and to a second point P2 are angled with respect to the direction of the flow. The three points P, P1, P2 illustrated in Fig. 1A will be discussed further below.

A cross-section of a different example is illustrated in Fig. 1B, in which the delay amount corresponds to a measurement distance from the radar sensor 100 to a point at a second side 119 of the conduit 100. As is illustrated by the example in Fig. 1B, the measurement distance may be larger than a diameter of the conduit 110. By arranging the radar sensor 100 at the first side 117 of the flow and by letting the delay amount correspond to a measurement distance to a point at the second side 119 of the flow, the reflected signals may avoid being sampled at a position within the flow of granular particles. Hence, a contribution to the mixing product from a specific location inside the flow may be reduced. This may be advantageous since that contribution may dominate the mixing product and may thereby obscure any other contribution to the mixing product. In Fig. 1C, in which the delay amount corresponds to a measurement distance similar to that of Fig. 1B, a reflective surface 130 has been arranged at the point P at the measurement distance from the radar sensor 100. Alternatively, the reflective surface 130 may be arranged at a position different from the point P at the measurement distance from the radar sensor 100. The reflective surface 130 may be reflective for the radar pulses emitted by the radar sensor 100. The reflective surface 130 may comprise a metal. The reflective surface 130 may be a separate surface as illustrated in Fig. 1C. However, it is to be understood that the reflective surface 130 may form part of the conduit 110. For instance, the reflective surface may be the second wall 118 of the conduit 110. The reflective surface 130 may be configured to reflect the transmitted radar pulses, whereby a signal level of the reflection signals received at the radar sensor 100 may be increased. Alternatively, the delay amount may, even though it is not illustrated in the examples of Fig. 1A - Fig. 1C, correspond to a measurement distance to a point within the flow. The radar sensor 100 may be further configured to sample the reflected signals by being configured to integrate the mixing product. The integrated mixing product may be indicative of the amplitude of the reflected signals. In particular, the integrated mixing product may be indicative of the amplitude of the reflected signals at the measurement distance corresponding to the delay amount. The radar sensor 100 may be configured to integrate the mixing product over time. The radar sensor 100 may be further configured to sample the reflected signals by being configured to convert the integrated mixing product to a digital value, which thereby forms the sample. The radar sensor 100 may comprise an analogue-to-digital converter (ADC) configured to convert the integrated mixing product to a digital value. Put differently, the samples may be digital values indicative of the amplitude of the reflective signals. The ADC may be configured to convert the reflected signals and/or the reference pulse to digital values. The digital value representing the reflected signals may be mixed with the digital value representing the reference pulse, thereby forming a digital value of the mixing product.

The radar signal processor 120 is configured to estimate a temporal variation of the amplitude of the reflected signals based on the samples. The variation may, e.g., be a variance, a standard deviation, etc. The skilled person would be aware of other suitable measures of the variation of the amplitude of the reflected signals. As a non-limiting example, the radar signal processor 120 may be configured estimate the variation over time of the amplitude of the reflected signals by being configured to calculate the variance of the amplitude of the reflected signals from the digital values forming the samples. The radar signal processor 120 is further configured to determine a flow metric based on the estimated variation. The flow metric may be a function of the estimated variation. For instance, as a non-limiting example, the flow metric may be the estimated variation, or the estimated variation multiplied by a predetermined factor. The flow rate of the flow of granular particles can thereby be estimated based on the temporal variation of an amplitude of reflected signals. This is less complex than using conventional algorithms, e.g., such as using measurements based on determining a Doppler shift of the reflected signals. Further, the flow metric is advantageously determined using low complexity calculations, whereby associated computational costs may be reduced as compared to conventional algorithms.

As is illustrated in Fig. 1A, a component of the direction of the transmitted radar pulses may be along the direction of the flow. For instance, the component may be in the same direction as the flow and/or in the opposite direction compared to the direction of the flow. For instance, the direction from the radar sensor 100 to a first point P1 in Fig. 1A has a component which is in a direction opposite the direction of the flow. The direction from the radar sensor 100 to a second point P2 in Fig. 1A has a component which is in the same direction as the flow. The transmitted radar pulses may be divergent. Due to such divergence, a component of the direction of the transmitted radar pulses may be along the direction of the flow. In such case, the transmitted radar pulses may have a component in the same direction as the flow and a component in the opposite direction compared to the direction of the flow. Alternatively, or additionally, the radar sensor 100 may be arranged (e.g., tilted) such that a component of the direction of the transmitted radar pulses is along the direction of the flow. Hence, the radar sensor 100 in the example of Fig. 1A may be arranged such that the direction of the transmitted radar pulses is towards the first point P1, the second point P2, or a point P. Alternatively, or additionally, the divergence of the transmitted radar pulses may result in the transmitted radar pulses reaching one or more of the first point P1, the second point P2, and the point P.

The radar sensor 100 may comprise elements (not illustrated) configured to affect the transmitted radar pulses. The elements may comprise a lens configured to change the divergence of the transmitted radar pulses. For instance, the lens may be configured to reduce the divergence of the transmitted radar pulses. As a further example, the lens may be configured such that the transmitted radar pulses are substantially collimated after being affected the lens. The elements may comprise a scatterer configured to increase a diameter of the transmitted radar pulses.

The radar signal processor 120 may be further configured to determine a frequency spectrum of the samples. Since the samples may be associated with the amplitude of the reflected signals, the frequency spectrum of the samples may be associated with the frequencies with which amplitude of the reflected signals varies. The frequency spectrum of the samples may be indicative of the flow speed of the flow of granular particles. The radar signal processor 120 may be further configured to determine a characteristic of the frequency spectrum. The characteristic may be indicative of a flow speed of the flow of granular particles. For instance, the characteristic may be a center of mass of the frequency spectrum. Put differently, the radar signal processor 120 may be further configured to determine the center of mass of the frequency spectrum. The center of mass of the frequency spectrum may be indicative of the flow speed of the flow of granular particles. The radar signal processor 120 may be further configured to determine a compensated flow metric based on the flow metric and the center of mass. The compensated flow metric may be determined as a function of the flow metric and the center of mass. For instance, the compensated flow metric may be a product of the flow metric and the center of mass, or a different combination of the two. The compensated flow metric may be indicative of the flow rate of the flow of granular particles. The radar signal processor 120 may be further configured to normalize the flow metric and the center of mass. The radar signal processor 120 may be configured to normalize parameters (i.e., the flow metric and the center of mass) by being configured to scale the parameters. This may be done such that two parameters can be compared. For instance, the flow metric and the center of mass may be scaled such that the two may be compared. For instance, each of the flow metric and the center of mass may be normalized by a measurement with the transmitter antenna and/or the receiver antenna of the radar sensor 100 turned off. Put differently, the signal may be normalized with regard to a noise level determined when no transmitter and/or receiver is active. As a further example, each of the flow metric and the center of mass may be normalized by a measurement of a flow having a known flow rate (e.g., a calibration flow). Hence, the compensated flow metric may be a function of a normalized flow metric and a normalized center of mass. The compensated flow metric may be a more accurate measure of the flow rate of the flow of granular particles. This may be due to the center of mass of the frequency spectrum of the samples being dependent on the flow speed of the flow of granular particles. Thus, by compensating the flow metric with the center of mass of the frequency spectrum, the compensated flow metric may be less sensitive to variations in only flow speeds.

Based on experiments, it has been found that relationships between the parameters typically have the appearance shown in the schematic diagrams (arbitrary units) illustrated in Fig. 4A - Fig. 4C, and Fig. 5A-Fig. 5C. Figure 4A - Fig. 4C illustrate the relationship between the parameters while keeping the flow rate constant. In Fig. 4A, the variation (in this case exemplified by the variance) of the amplitude of the reflected signals is illustrated as a function of flow speed. As is seen in Fig. 4A, the variance initially increases with increasing flow speed up to a peak value. For larger flow speeds, the variance decreases with increasing flow speed. The portion of the diagram in which the variance increases with increasing flow speed (corresponding to flow speeds up to V_{A} in Fig. 4A) may correspond to non-realistic flow speeds. For flow speeds in this portion, the particle number density may become unrealistically high in order to produce a flow rate corresponding to the fixed flow rate. Thus, at a fixed flow rate and for realistic flow speeds (i.e., higher than V_{A} in Fig. 4A), the variance of the amplitude of the reflected signals typically decreases for increasing flow speeds. This may be due to that the flow of granular particles may become more homogenous at higher flow speeds (as compared to lower flow speeds), whereby the variation (in this case the variance) of the amplitude of the reflected signals may be lower. Figure 4B illustrates the center of mass of the frequency spectrum of the reflected signals as a function of flow speed. In Fig. 4B, it can be seen that the center of mass typically increases with increasing flow speed. This may be an effect of a component of the direction of the transmitted radar pulses is along the direction of the flow. For instance, the component of the direction of the transmitted radar pulse may be in a direction against and/or along the direction of the flow, and this may affect the center of mass of the frequency spectrum. Hence, both the variation and the center of mass may vary with flow speed for a fixed flow rate. Determining a compensated flow metric using both of the variation and the center of mass may therefore be a more reliable measure of the flow rate. This is exemplified in Fig. 4C, which illustrates a product of the variance (illustrated in Fig. 4A) and the center of mass (illustrated in Fig. 4B) as a function of flow speed. As can clearly be seen in Fig. 4C, the product for realistic flow speeds (i.e., higher than V_{A}) varies less with flow speed than the variance or the center of mass. A compensated flow metric (in Fig. 4C represented by the product) may be a more reliable measure of the flow rate of the flow of granular particles. In particular, the compensated flow metric may be less sensitive to variations in flow speed (compared to the flow metric), and variations in the compensated flow metric may predominantly be due to variations in the flow rate of the flow of granular particles.

Figure 5A - Fig. 5C illustrate the relationship between the parameters while keeping the flow speed constant. As can be clearly seen in Fig. 5A and Fig. 5B, both the variance and the center of mass may increase with increasing flow rate for a flow with fixed flow speed. This means that, for a constant or known flow speed, the variation can be used as a flow metric indicative of the flow rate of the flow of granular particles. The flow speed may be constant, or substantially constant, if the flow of granular particles is driven by a constant support flow, such as an airflow (e.g., driven by fans). The flow speed may be determined in some manner. For instance, the flow speed (for a constant or non-constant flow speed) may be determined by an airflow sensor (not illustrated in the figures), e.g., a venturi tube, a propeller, etc. The skilled person would be aware of other manners in which the flow of granular particles may be driven. As a different example, the flow of granular particles may be driven by gravity (e.g., by tilting the conduit 110 relative to the ground). In such case, the flow speed may be estimated using the direction of the flow relative to the direction in which gravity acts (e.g., by the tilt angle of the conduit 110) and the acceleration due to gravity. As discussed previously in connection with Fig. 4B, the center of mass may be a measure of the flow speed, and the flow metric may therefore be compensated using the center of mass. Such compensated flow metric is exemplified in Fig. 5C by the product of the variance (Fig. 5A) and the center of mass (Fig. 5B). As is seen in Fig. 5C, the compensated flow metric may increase with increasing flow rate for a flow with fixed flow speed. By comparing the result in Fig. 4C with the result in Fig. 5C, it may be concluded that the compensated flow metric (in this example illustrated as the product) may predominantly vary with the flow rate since the compensated flow metric may be less sensitive to variations of the flow speed (see Fig. 4C).

The radar signal processor 120 may be further configured to estimate a flow rate of the flow of granular particles from the determined flow metric. In case the compensated flow metric is determined, the radar signal processor 120 may be configured to estimate a flow rate of the flow of granular particles from the compensated flow metric. The estimated flow rate may be an absolute flow rate or a relative flow rate. Here, "absolute flow rate" should be understood as a flow rate in absolute terms. This is in contrast with a "relative flow rate" which should be understood as a flow rate in relative terms. A flow rate in absolute terms may be a value (e.g., in kg/s) which is the actual flow rate of the flow of granular particles. A flow rate in relative terms may be a value (e.g., dimensionless) which is the flow rate of the flow of granular particles relative to a different measurement (e.g., a variation of amplitudes of reflected signals when there is no flow of granular particles). The radar signal processor 120 may be configured to estimate the flow rate of the flow of granular particles using a mapping function. The mapping function may correlate flow metrics with flow rates. Alternatively, or additionally, the mapping function may correlate compensated flow metrics with flow rates. As a non-limiting example, the mapping function may use a lookup table. The lookup table may, e.g., correlate flow metrics and/or compensated flow metrics with flow rates. As a further example, the mapping function may be a machine learning model trained to correlate flow metrics and/or compensated flow metrics with flow rates. An absolute flow rate and/or relative flow rate of the flow of granular particles may thereby be estimated with high accuracy.

The present inventive concept may be adapted to detect changes in the flow of granular particles. For instance, the radar sensor 100 may be configured to determine a further plurality of radar measurements distributed over a further measurement time period. The further measurement time period may be different from said measurement time period. The further measurement time period may be later than said measurement time period. The radar sensor 100 may be configured to determine the further plurality of radar measurements in the same manner as said plurality of radar measurements. Hence, the radar sensor 100 may be configured to transmit radar pulses through the flow and in a direction across the flow, receive further reflected signals, and sample the further reflected signals. The radar signal processor 120 may be further configured to estimate a variation over time of an amplitude of the further reflected signals based on samples of the further reflected signals. The radar signal processor 120 may be further configured to determine a further flow metric based on the determined variation of the amplitude of the further reflected signals. Based on a comparison of said flow metric and the flow metric, a signal indicative of a changed flow may be generated. The signal may be generated by the radar signal processor. The signal may be generated by a separate computing device (not illustrated in Fig. 1A - Fig. 1C) such as a computer, server, etc. Hence, by determining several flow metrics separated in time, the flow of granular particles may be monitored by finding variations in the generated signal.

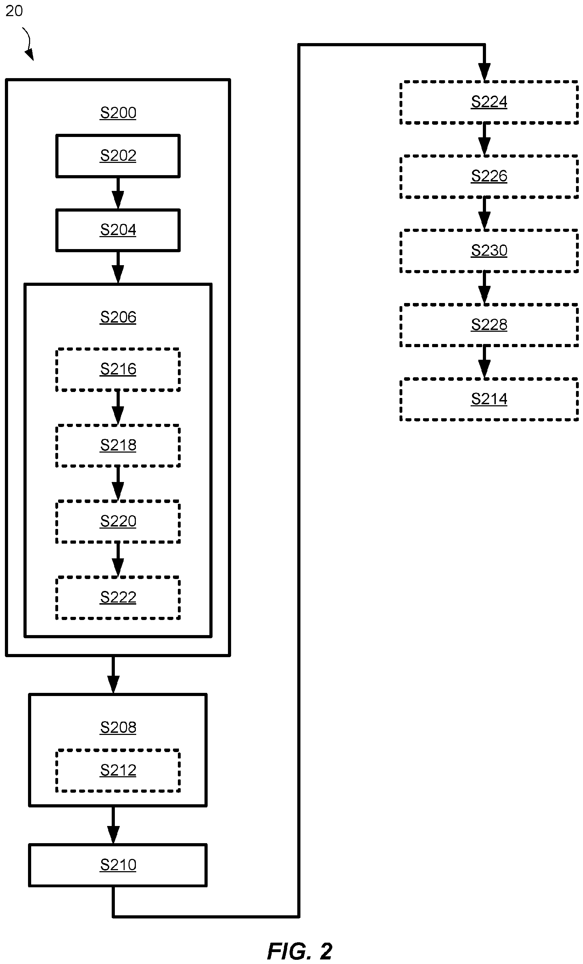

Figure 2 is a block scheme of a method 20 for determining a flow metric for a flow of granular particles. The method 20 comprises performing S200, using a radar sensor 100, a plurality of radar measurements distributed over a measurement time period comprising: transmitting S202 radar pulses through the flow and in a direction across the flow, receiving S204 reflected signals, and sampling S206 the reflected signals. Sampling S206 the reflected signals may comprise generating S216 a reference pulse for each transmitted radar pulse; mixing S218 a respective reflected signal with the reference pulse to obtain a mixing product; integrating S220 the mixing product; and converting S222 the integrated mixing product to a digital value forming the sample. The generation of the reference pulse may be delayed with respect to the transmitted radar pulse by a delay amount. The delay amount may be the same for each radar measurement of the plurality of radar measurements. The radar sensor 100 may be arranged at a first side 117 of the flow of granular particles. The delay amount may correspond to a measurement distance from the radar sensor 100 to a point P at a second side 119 of the flow of granular particles opposite to the first side 117. The flow of granular particles may be inside a conduit 110. The radar sensor 100 may be arranged outside the conduit 110. The delay amount may correspond to a measurement distance larger than a diameter of the conduit 110. The method 20 further comprises estimating S208, using a radar signal processor 120 and based on the samples, a variation over time of an amplitude of the reflected signals. Estimating S208 the variation may comprise calculating S212 a variance of the amplitude of the reflected signals. The method 20 further comprises determining S210, using the radar signal processor 120, the flow metric based on the estimated variation. The flow metric is indicative of a flow rate of the flow of granular particles. A component of the direction of the transmitted radar pulses may be along the direction of the flow. The method 20 may further comprise: using the radar signal processor 120: determining S224 a frequency spectrum of the samples, determining S226 a center of mass of the frequency spectrum, and determining S228 a compensated flow metric based on the flow metric and the center of mass. The flow metric and the center of mass may be normalized S230, S232 prior to determining S228 the compensated flow metric. The method 20 may further comprise: using the radar signal processor 120: normalizing S230 the flow metric; and normalizing S232 the center of mass; and wherein the compensated flow metric may be determined S228 based on the normalized flow metric and the normalized center of mass. The method 20 may further comprise estimating S214, using the radar signal processor 120, a flow rate of the flow of granular particles from the determined flow metric. The flow rate of the flow of granular particles may be estimated using a mapping function correlating flow metrics with flow rates. The mapping function may be a machine learning model trained to correlate flow metrics with flow rates.

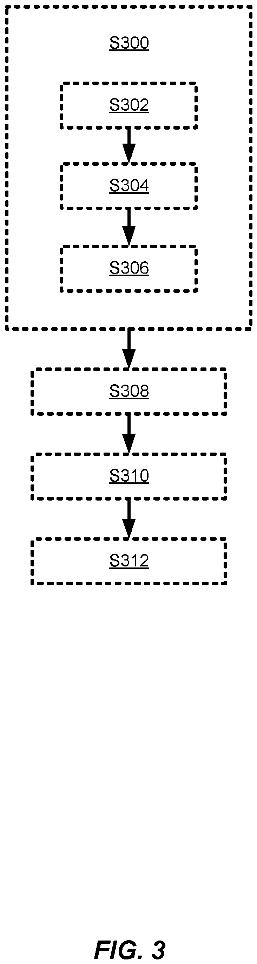

The method 20 may further comprise one or more steps illustrated in Fig. 3. Hence, as illustrated in Fig. 3, the method 20 may further comprise performing S300, using the radar sensor 100, a further plurality of radar measurements distributed over a further measurement time period different from said measurement time period, comprising: transmitting S302 radar pulses through the flow and in a direction across the flow, receiving S304 further reflected signals, and sampling S306 the further reflected signals. The method 20 may further comprise estimating S308, using the radar signal processor and based on samples of the further reflected signals, a variation over time of an amplitude of the further reflected signals. The method 20 may further comprise determining S310, using the radar signal processor 120, a further flow metric based on the determined variation of the amplitude of the further reflected signals. The method 20 may further comprise generating S312 a signal indicative of a changed flow based on a comparison of said flow metric and the further flow metric. It is to be understood that one or more method steps discussed in connection with Fig. 1A - Fig. 1C, and Fig. 2. may additionally be used in connection with the method steps illustrated in Fig. 3. For instance, the further flow metric may be compensated as discussed in connection with Fig. 1A - Fig. 1C, and Fig. 2.

The person skilled in the art realizes that the present inventive concept by no means is limited to the preferred variants described above. On the contrary, many modifications and variations are possible within the scope of the appended claims.

For example, the present inventive concept has been discussed for a flow of granular particles flowing inside a conduit. It is however to be understood that the conduit is by no means necessary for the present inventive concept. Instead, the flow may flow freely (e.g., a free-falling flow) or the granular particles may be transported on a different type of transport member arranged to transport the granular particles from the inlet to the outlet. The transport member may, e.g., be a conveyor. The transport member may have a support surface arranged to support the flow of granular particles. For instance, the transport member may be an open channel. The open channel may, e.g., comprise the support surface. Additionally, the open channel may comprise one or more of side surfaces and a top surface.

Additionally, variations to the disclosed variants can be understood and effected by the skilled person in practicing the claimed invention, from a study of the drawings, the disclosure, and the appended claims.

## Claims

1. A method (20) for determining a flow metric for a flow of granular particles, the method (20) comprising:
performing (S200), using a radar sensor (100), a plurality of radar measurements distributed over a measurement time period comprising:
transmitting (S202) radar pulses through the flow and in a direction across the flow,
receiving (S204) reflected signals, and
sampling (S206) the reflected signals;
estimating (S208), using a radar signal processor (120) and based on the samples, a variation over time of an amplitude of the reflected signals; and
determining (S210), using the radar signal processor (120), the flow metric based on the estimated variation, wherein the flow metric is indicative of a flow rate of the flow of granular particles.

2. The method (20) according to claim 1, wherein estimating (S208) the variation comprises calculating (S212) a variance of the amplitude of the reflected signals.

3. The method (20) according to claim 1 or 2, further comprising:
estimating (S214), using the radar signal processor (120), a flow rate of the flow of granular particles from the determined flow metric.

4. The method (20) according to claim 3, wherein the flow rate of the flow of granular particles is estimated (S214) using a mapping function correlating flow metrics with flow rates.

5. The method (20) according to claim 4, wherein the mapping function is a machine learning model trained to correlate flow metrics with flow rates.

6. The method (20) according to any one of claims 1-5, wherein sampling (S206) the reflected signals comprises:
generating (S216) a reference pulse for each transmitted radar pulse, wherein the generation of the reference pulse is delayed with respect to the transmitted radar pulse by a delay amount;
mixing (S218) a respective reflected signal with the reference pulse to obtain a mixing product;
integrating (S220) the mixing product; and
converting (S222) the integrated mixing product to a digital value forming the sample.

7. The method (20) according to claim 6, wherein the delay amount is the same for each radar measurement of the plurality of radar measurements.

8. The method (20) according to claim 6 or 7, wherein the radar sensor (100) is arranged at a first side (117) of the flow of granular particles, and wherein the delay amount corresponds to a measurement distance from the radar sensor (100) to a point at a second side (119) of the flow of granular particles opposite to the first side (117).

9. The method (20) according to any one of claims 1-8, wherein a component of the direction of the transmitted radar pulses is along the direction of the flow, the method (20) further comprising:
using the radar signal processor (120):
determining (S224) a frequency spectrum of the samples,
determining (S226) a center of mass of the frequency spectrum, and
determining (S228) a compensated flow metric based on the flow metric and the center of mass.

10. The method (20) according to claim 9, wherein the flow metric and the center of mass are normalized (S230, S232) prior to determining the compensated flow metric.

11. The method (20) according to any one of claim 1-10, further comprising:
performing (S200), using the radar sensor (100), a further plurality of radar measurements distributed over a further measurement time period different from said measurement time period, comprising:
transmitting (S202) radar pulses through the flow and in a direction across the flow,
receiving (S204) further reflected signals, and
sampling (S206) the further reflected signals;
estimating (S208), using the radar signal processor (120) and based on samples of the further reflected signals, a variation over time of an amplitude of the further reflected signals; and
determining (S210), using the radar signal processor (120), a further flow metric based on the determined variation of the amplitude of the further reflected signals; and
generating (S212) a signal indicative of a changed flow based on a comparison of said flow metric and the further flow metric.

12. The method (20) according to any one of claims 1-11, wherein the flow of granular particles is inside a conduit (110), and the radar sensor (100) is arranged outside the conduit (110).

13. The method (20) according to claim 9 when dependent on any one of claims 6-8, wherein the delay amount corresponds to a measurement distance larger than a diameter of the conduit (110).
